(19) Europäisches Patentamt
European Patent Office
Office européen des brevets

(11) **EP 4 538 649 A1**

(12) **EUROPEAN PATENT APPLICATION**

(43) Date of publication:
**16.04.2025 Bulletin 2025/16**

(51) International Patent Classification (IPC):
***G01D 5/353*** (2006.01)

(21) Application number: 23202741.7

(22) Date of filing: **10.10.2023**

(52) Cooperative Patent Classification (CPC):
**G01D 5/35316; G01D 5/35306; G01L 1/246**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nederlandse Organisatie voor toegepast-natuurwetenschappelijk Onderzoek TNO**
**2595 DA 's-Gravenhage (NL)**

(72) Inventors:
• **CHENG, Lun-Kai**
**2595 DA's-Gravenhage (NL)**
• **KLINKHAMER, Jacob Fredrik Friso**
**2595 DA's-Gravenhage (NL)**
• **TOET, Peter Martijn**
**2595 DA's-Gravenhage (NL)**
• **DIJKHUIZEN, Niels**
**2595 DA's-Gravenhage (NL)**

(74) Representative: **V.O.**
**P.O. Box 87930**
**2508 DH Den Haag (NL)**

(54) **OPTICAL SENSOR FOR AND METHOD OF INTERROGATING A FIBER GRATING SENSOR**

(57) The invention is directed at an optical sensor for interrogating a fiber grating sensor for determining a wavelength characteristic of an optical output signal. The optical sensor comprises a radiation source for illuminating the fiber grating sensor with an optical interrogation signal, an interferometer, and an optical conveyance structure. The interferometer is configured for splitting the optical output signal into a first and second signal fraction, and includes a first and second branch for conveying the first and second signal fraction, which branches are of different length to establish a path length difference. The interferometer is further configured for combining the signal fractions and for providing the combined signal to an output port for determination of the wavelength characteristic by an analyzer. The radiation source provides an optical radiation signal at discrete wavelengths, which include at least three wavelengths overlapping with a spectral bandwidth of the fiber grating sensor.

## Fig. 1

**Description**

Field of the invention

The present invention is directed at an optical sensor for interrogating a fiber grating sensor for determining a wavelength characteristic of an optical output signal obtained from the fiber grating sensor, the fiber grating sensor comprising a fiber section including an internal structural periodicity such as to reflect, upon receiving an optical interrogation signal in use, optical radiation at a reflection wavelength that is dependent on the internal structural periodicity, wherein the optical sensor comprises a radiation source for illuminating the fiber grating sensor with the optical interrogation signal, an interferometer, and an optical conveyance structure, wherein the optical conveyance structure is configured for conveying the optical interrogation signal to the fiber grating sensor and for conveying the optical output signal from the fiber grating sensor to the interferometer. The invention is further directed at a method of interrogating a fiber grating sensor.

Background

Fiber grating sensors, such as fiber Bragg grating (FBG) sensors, are widely used for measuring static and dynamic mechanical behavior of structures and objects. The fiber grating sensors consist of a fiber wherein a periodic structure of refractive index variations having an as accurate as possible periodicity is present. Upon illuminating the fiber grating sensor, the structural periodicity causes one wavelength that matches the periodicity (i.e. periodic length of each structural period) to be reflected by the grating whilst the remaining wavelengths of the optical radiation are transmitted. Putting the sensor under longitudinal strain will cause the grating periodicity to change, in the sense that the force exerted on the grating will cause the grating structure to be stretched or compressed. The result thereof will be that the reflected wavelength will shift, i.e. shorten upon compressing the fiber grating sensor and extend upon stretching the fiber grating sensor. This enables the accurate detection of strain variations, which can be used in a wide range of applications such as monitoring of the structural integrity of objects (solar panels, vehicles, vessels) and structures (buildings, wind turbines, bridges, roads, pipelines) under influence of thermal stress, vibrations, in use and during manufacturing or development of a sensor in which the measurand e.g. pressure is converted to a change of the grating structure by a transducer mechanism.

The standard interrogation technologies of commercial systems (scanning laser, scanning optical filter, spectrometer) are not always sensitive enough under all circumstances. For example, to detect low amplitude high frequency signals e.g. induced by acoustic or elastic waves in mechanical constructions, the wavelength shift is only marginal and may be hidden within noise signals of various origins. One of the reasons for this is the "rough" wavelength sampling step of the interrogation systems applied (typically a few picometer for the scanning type of interrogator to sub-nanometer for spectrometer type). A fine wavelength sampling requires extreme accurate wavelength measurement control technology for a wavelength scanning system. Furthermore, fine wavelength sampling corresponds to more wavelength steps, which increases the measurement time for a wavelength scanning system.

Summary of the invention

It is an object of the present invention to overcome the disadvantages of the prior art interrogation methods, and to provide an optical sensor for interrogating a fiber grating sensor having improved sensitivity to very small strain variations.
To this end, in accordance with a first aspect, there is provided herewith an optical sensor as described above, wherein the interferometer is configured for splitting the optical output signal into a first signal fraction and a second signal fraction, and including a first branch for conveying the first signal fraction and a second branch for conveying the second signal fraction. The first branch and the second branch are of different length in order to establish a path length difference between the first signal fraction and the second signal fraction. The interferometer further combines the first and second signal fraction from the first and second branch into a combined signal to generate interference, and provides the combined signal to at least one output port of the optical sensor for enabling determination of the wavelength characteristic by an analyzer operatively connectable to the at least one output port. In particular, the radiation source is configured for providing an optical radiation signal comprising optical radiation at a plurality of discrete wavelengths, wherein the plurality of discrete wavelengths include at least three wavelengths overlapping with a spectral bandwidth of the fiber grating sensor.
The design of the optical sensor of the present invention applies a radiation source providing optical radiation at a plurality of discrete wavelengths. Multiple of these discrete wavelengths (at least three) overlap with the reflected signal spectrum of the fiber grating sensor, and preferably many of the discrete wavelengths overlap with the reflected signal spectrum. As a result thereof, it has been found that the phase noise level in the output signal is reduced considerably in comparison to a radiation source with a continuous spectrum. Because wavelength variations of the grating spectrum can be measured using the interferometer on the basis of their resulting change in phase difference between the first and second signal fraction, the reduction in phase noise level in turn causes the optical sensor to be significantly more sensitive to small wavelength shifts.

Without being bound by theory, the reduced phase noise level can be explained on the basis of a reduction or even absence of beat noise, which is may be present when using an illumination source with a continuous spectrum. Combined with the operation principles of optical couplers, the spontaneous-spontaneous beat noise which occurs for any combination of frequencies within the spectrum becomes a dominant noise factor that hampers the detection of strain variations caused by high frequency acoustic signals (e.g. above 100 Hertz, preferably above $10^3$ Hertz, more preferably above $10^4$ Hertz). By illuminating the fiber grating sensor using discrete wavelengths, i.e. a frequency comb signal, beat noise only occurs between the discrete wavelengths and at frequencies which are multiples of the frequency comb frequency of tens of MHz. These frequencies are in general outside the detection frequency range of the fiber grating sensor and thus will no longer be present (or is at least considerably decreased in magnitude) within the measurement spectrum. As a result, the phase noise level is considerably decreased for the measurement frequencies of interest (e.g. without difficulty a hundred times less compared to a conventional setup).

In the interferometer based optical interrogation sensor arrangement considered, wavelength change induced interferometer phase changes are scaled proportional to the optical path length difference achievable in the interrogator. Although, for this reason, the optical path length difference may therefore be chosen to be as large as possible, this is limited by the coherence length of the spectrum sent to the interferometric interrogator. Increasing the optical path length difference in the arms (branches) of the interferometer, will reduce the interferometric visibility (or shortly 'visibility') of the interference signal. Below a certain visibility (e.g. below 50% , which corresponds to an optical path length difference of approximately the coherence length) the phase noise level becomes increasingly detrimental to the measurement. By using a frequency comb type radiation source, which provides radiation at a plurality of discrete wavelengths, the phase noise level is decreased significantly for the same visibility in comparison with the a continuous spectrum because the spontaneous beat noise is reduced. As a result, the optical interrogation sensor with the same optical path length difference (OPD) scale factor enables the detection of smaller wavelength shifts.

In some examples, the radiation source is configured for providing the optical radiation signal comprising the optical radiation such that a signal power at each wavelength of the plurality of discrete wavelengths is larger than a signal power at a wavelength different from the plurality of discrete wavelengths, such as to provide a frequency comb signal. For example, in some of these examples, the signal power at each wavelength of the plurality of discrete wavelengths is at least 30% larger than a signal power at a wavelength different from the plurality of discrete wavelengths, preferably at least 50% larger, more preferably at least 70% larger, more preferably 90% larger. As may be appreciated, preferably the signal power in between the discrete wavelengths will be negligible, i.e. close to zero or ideally even absent, in order to provide an ideal frequency comb.

In other of these or further examples, each two subsequent wavelengths of the plurality of discrete wavelengths provided by the radiation source have a wavelength difference, such that the wavelengths of the plurality of discrete wavelengths relate to equidistant frequencies in the optical frequency domain where the relation between the wavelength $\lambda$ in vacuum and the optical frequency f is $\lambda=c/f$. Although this exact equidistant frequency is not critical and the wavelengths applied in some examples of the invention may be at a different inter-distance in the frequency domain (e.g. 40% or 50%), the distance between subsequent wavelengths in the frequency domain preferably will be less than 30% of the spectral range of the wavelength spectrum of the fiber grating sensor (such as to have at least three discrete wavelengths overlapping with the spectrum), and preferably even less than 20%, or less than 10% or even less than 5% or 1%. An ideal radiation signal for illumination provides a large number of discrete wavelengths overlapping the spectral range of the wavelength spectrum of the fiber grating sensor, while at the same time preventing beat noise signals to occur within this wavelength spectrum.

In some examples, the interferometer is operatively connected, using the optical conveyance structure, to an input side of the fiber grating sensor such as to obtain, as the optical output signal, a reflected signal from the fiber grating sensor comprising the reflection wavelength. In these examples, the fiber grating sensor is interrogated in reflection, providing only the reflected wavelengths to the interferometer. The output signal of the fiber grating sensor is thus void of any wavelengths outside the reflected signal spectrum. Although thus only a small fraction of the original radiation intensity is available for measurement in these examples, the absence of signals outside this spectrum renders the signal to be well measurable. For example, the envelop of the reflected signal spectrum is determined by the fiber grating. As explained, the phase change in the interferometer is related to the wavelength shift of the reflection wavelength spectrum with the scale factor proportional to the path length difference of the interferometer.

In some preferred examples, the radiation source used for illuminating the fiber grating sensor is a mode-locked laser. In a mode-locked laser, the modes of the laser oscillate in phase with each other at the output, resulting due to constructive interference in a sequence of ultra-short pulses of optical radiation of high peak power and extremely short pulse durations. The pulse duration is typically in the picosecond or femtosecond range, and mode-locked lasers are therefore sometimes referred to as femtosecond lasers. The mode-locking of the laser corresponds to the radiation spectrum thereof to consist of a frequency comb of discrete wavelengths spanning the laser gain bandwidth. The spacing of the frequencies, is at fixed intervals. Due to the efficient principle of constructive interference in the mode-locked laser, the signal power in between the discrete wavelengths is negligible, and therefor the optical radiation from the mode-locked laser provides the preferred frequency comb and is very suitable for illuminating the fiber grating sensor as explained above. As may be appreciated, the bandwidth of the mode-locked laser must be such that at least three discrete wavelengths overlap with the wavelength spectrum of the reflected signal of the fiber grating sensor. In principle, the spacing of wavelengths is of relatively high density in comparison to the fiber grating sensor spectrum of which the wavelength shift needs to be detected.

Again, the use of a mode-locked laser is exemplary and preferred, but not critical, because there are other manners of providing wavelengths with an equidistant frequency (i.e. a frequency comb) that may likewise be applied in some examples. In some examples, this may be achieved by using two high-power lasers of slightly different frequency and transmit their beams simultaneously through a photonic-crystal fiber, in order to create a frequency comb by four-wave mixing. Furthermore, another example would be to use a continuous-wave laser of which the amplitude and/or phase would be modulated with an external modulator driven by a radio-frequency source. Therefore, different implementations are available to the skilled person, the mode-locked-laser being preferred for achieving a high density (in frequency domain) of wavelengths with an equidistant frequency in a convenient implementation.

In some examples, the interferometer is configured for providing the combined signal to at least two output ports, for enabling phase determination from at least two interference signals. However in some preferred examples, the interferometer is configured for providing the combined signal to at least three output ports, for enabling phase determination from at least three interference signals. In these examples, the intensities on each of the output ports is determined and compared in order to determine the phase of the signal therefrom. An advantage thereof is that phase calculation using three or more interference signals enables to suppress the influence of changes in optical power of the output signal from the fiber grating sensor or changes in visibility of the interference signal.

In some examples, the interferometer comprises at least one of: a Mach-Zehnder type interferometer, a Michelson type interferometer, a Fabry-Pérot interferometer, a Sagnac interferometer, a common path type interferometer. In principle, many other types of interferometers may advantageously be applied in various examples, and the abovementioned types interferometers do not form an exclusive selection or preference. Due to the fact that the use is made of a fiber grating sensor, the use of fiber interferometers is preferred in combination with suitable optical elements such as optical couplers, circulators and the like.

In a second aspect thereof, the invention further relates to a method of interrogating a fiber grating sensor using an optical sensor arrangement, for determining a wavelength characteristic of an optical output signal obtained from the fiber grating sensor, wherein the fiber grating sensor comprises a fiber section including an internal structural periodicity such as to reflect, upon receiving an optical interrogation signal in use, optical radiation at a reflection wavelength that is dependent on the internal structural periodicity, the method comprising: illuminating, using a radiation source, the fiber grating sensor with said optical interrogation signal; receiving, from the fiber grating sensor by an interferometer, an optical output signal; splitting, by the interferometer, the optical output signal into a first signal fraction and a second signal fraction, the interferometer including a first branch for conveying the first signal fraction and a second branch for conveying the second signal fraction, wherein the first branch and the second branch are of different length such as to establish a path length difference between the first signal fraction and the second signal fraction; and combining, by the interferometer, the first and second signal fraction from the first and second branch into a combined interference signal, and providing the combined signal to at least one output port for enabling determination of the wavelength characteristic by an analyzer operatively connected to the at least one output port; wherein the step of illuminating is performed using a radiation source which is configured for providing an optical radiation signal comprising optical radiation at a plurality of discrete wavelengths, wherein the plurality of discrete wavelengths include at least three wavelengths overlapping with a spectral bandwidth of the fiber grating sensor.

In some examples, the radiation source may be a mode-locked laser for example, as explained above. Furthermore, in some examples, the interferometer may be configured for providing multiple interference signals with pre-defined phase offset e.g. by generating the output signal to at least three interferometer output ports, e.g. using a 3x3 interferometer, 4x4 interferometer, 5x5 interferometer, etc. An advantage thereof is that phase calculation using three or more interference signals with pre-defined phase difference enables to suppress the influence of changes in optical power of the output signal from the fiber grating sensor or changes in visibility. In other examples, instead of or in addition to interrogating a fiber grating sensor, a different sensor may be present in the optical sensor arrangement, which may be interrogated instead or in addition. For example, this sensor may be an optical filtering device which reflects or transmits, from an incoming spectrum of the optical interrogation signal of the radiation source, one or more spectral bands. In the or these spectral bands, a center wavelength of the or each spectral band may depend on a strain or a temperature applied to the optical filter device. As an example, the different or additional sensor in these examples could include or be formed by a Fabry-Perot filter that could be interrogated in transmission.

Brief description of the drawings

The invention will further be elucidated by description of some specific examples thereof, making reference to the attached drawings. The detailed description provides examples of possible implementations of the invention, but is not to be regarded as describing the only examples falling under the scope. The scope of the invention is defined in the claims, and the description is to be regarded as illustrative without being restrictive on the invention. In the drawings:

Figure 1 illustrates an example of an optical sensor arrangement, achieving the advantages and effects as described herein;
Figure 2 illustrates another example of an optical sensor arrangement, achieving the advantages and effects as described herein;
Figure 3 illustrates another example of an optical sensor arrangement, achieving the advantages and effects as described herein;
Figure 4 illustrates another example of an optical sensor arrangement, achieving the advantages and effects as described herein;
Figure 5 schematically illustrates an illumination spectrum of a mode locked laser unit compared to a reflection spectrum of a fiber grating sensor, in an example;
Figure 6 illustrates a graph of a phase noise level in relation to an interferometric visibility;
Figure 7 illustrates a graph indicating a phase noise level in relation to frequency, for an optical sensor arrangement interrogating a fiber bragg grating using a continuous wave type light source;
Figure 8 illustrates a graph indicating a phase noise level in relation to frequency, for an exemplary optical sensor arrangement interrogating a fiber grating sensor using a mode locked laser.

Detailed description

Terminology used for describing particular examples is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which examples of the invention are shown. In the drawings, the absolute and relative sizes of systems, components, layers, and regions may be exaggerated for clarity. Examples may be described with reference to schematic and/or cross-section illustrations of possibly idealized examples and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

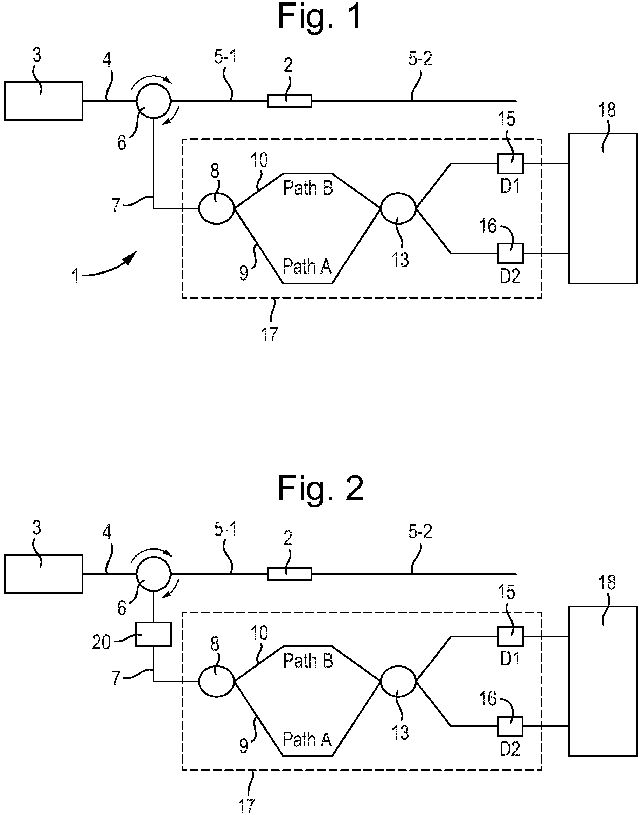

In figure 1, there is illustrated an optical sensor arrangement 1 for interrogating a fiber grating sensor 2. The fiber grating sensor may include for example any of: a fiber Bragg grating (FBG), long-period fiber grating, chirped fiber grating, tilted fiber grating, a sampled fiber grating or any other type of fiber grating sensor. The fiber grating sensor 2 is to be interrogated for determining a wavelength characteristic of an optical output signal obtained from the fiber grating sensor 2. Thereto, the fiber grating sensor 2 is operatively connected, using an optical conveyance structure including fibers 4 and 5-1 or other optical conveyors, to a radiation source 3. Radiation source 3 may be a single radiation unit or may comprise a system of radiation units. Radiation source 3 is of a type that is suitable to provide discrete wavelengths of radiation. For example radiation source 3 may comprise multiple radiation units in an arrangement, or may comprise other means suitable for providing a frequency comb signal. A frequency comb signal is a signal that includes a series of discrete wavelengths, for example these discrete wavelengths may include a precise and regular series of wavelengths that are equidistant in the frequency domain. Alternatively, the wavelengths may not be equidistant. These wavelengths are often generated using one or more lasers or a laser system, although the skilled person will recognize that there are other manners of providing a frequency comb signal.

The fiber grating sensor 2 comprises a fiber section, which includes an internal structural periodicity in order to reflect, upon receiving an optical interrogation signal in use, optical radiation at a reflection wavelength that is dependent on the internal structural periodicity. For example, the internal structural periodicity is provided by a refractive index modulation in order to reflect, upon receiving an optical interrogation signal in use, optical radiation at a reflection wavelength that is dependent on the internal structural periodicity and the refractive index profile of the structure. The relation between the reflected wavelength and the grating properties of such a fiber grating sensor 2 may be $\lambda = 2*n_{eff}*\Lambda$, where $n_{eff}$ is the effective refractive index of the mode of the fiber and $\Lambda$ is the periodicity of the grating. The fiber grating sensor 2 may for example be a fiber bragg grating. A fiber bragg grating is a fiber containing a fiber section including a periodic variation of the refractive index therein. The fiber bragg grating reflects specific wavelengths of radiation while allowing other wavelengths to pass through in transmission. The periodic variation of the refractive index may be obtained by exposing the fiber to intense ultraviolet light in order to modify the refractive index of the core. Dependent on the periodicity of the structure, light incident on the grating will be reflected at a specific wavelength band of which the center wavelength is determined by the grating spacing. A fiber bragg grating is a particular type of fiber grating sensor 2 that may be applied in some examples. Other types of fiber grating sensors 2 may likewise be interrogated using an exemplary optical sensor arrangement 1 as illustrated (in any of figures 1-4, or a different example thereof).

Fiber grating sensors are applied in many different types of applications, often as sensors in order to measure certain physical parameters that are able (dependent on how the fiber grating sensors are applied in a setup) to modify the periodicity. For example, strain or compression can be measured using a fiber grating sensor 2 by attaching the fiber grating sensor 2 such that it is stretched of compressed along its length under influence of strain. Likewise, temperature changes in a given material will give rise to stretching or compression of a fiber grating sensor 2. Vibrations or other dynamic variations in structures may be accurately monitored using these sensors as well if the change in the center wavelength of the grating reflection spectrum can be measured with sufficient speed.

The optical sensor arrangement 1 comprises a radiation source 3 for illuminating the fiber grating sensor 2 with an optical interrogation signal. The fiber grating sensor 2 reflects a specific wavelength (with a small wavelength range) back into fiber 5-1. The part of an optical signal that is transmitted by the fiber grating sensor 2 is void of the reflected wavelength, and is transmitted into fiber 5-2. In figure 1, the fiber grating sensor 2 is interrogated in reflection. Thereto, fiber 4 receives the optical input signal from radiation source 3, and transmits the optical input signal via optical circulator 6 to the fiber grating sensor 2 via fiber 5-1. The optical signal fraction reflected by the fiber grating sensor 2 is returned to the circulator 6 and forms the output signal in reflection. This optical signal fraction is received from fiber 5-1 by circulator 6, and transmitted to a fiber 7. Fiber 7 conveys the reflected optical radiation (i.e. the output signal in reflection) from fiber grating sensor 2 towards an interferometer 17.

The optical conveyance structure (5-1, 5-2, 7) is configured for conveying the optical interrogation signal to the fiber grating sensor 2 and for conveying the optical output signal (such as the reflected signal in fiber 5-1) from the fiber grating sensor 2 to the interferometer 17. Alternatively or additionally, in some examples, the optical sensor arrangement 1 may also be connected to the interferometer 17 in transmission.

The interferometer 17 may be of any suitable type, such as a Mach-Zehnder interferometer, a Michelson interferometer, a Twyman-Green interferometer, a Fabry-Perot interferometer, or any other suitable interferometer of which the interferometer output depends on the center wavelength of the light submitted to the interfermeter. For example, the interferometer 17 may be a fiber based interferometer, to which fiber 7 may readily be connected. Interferometer 17 of the example illustrated in figure 1 is a two branch, fiber based Mach-Zehnder interferometer. The interferometer 17 comprises an optical splitter 8. The optical splitter 8 is configured for splitting the optical output signal into a first signal fraction and a second signal fraction. The interferometer 17 includes a first branch 9 for conveying the first signal fraction and a second branch 10 for conveying the second signal fraction. The first branch 9 and the second branch 10 are of different length such as to provide a path length difference (optical path difference (OPD)), establishing a phase difference between the first signal fraction and the second signal fraction. The interferometer 17 further comprises a beam combiner or coupler 13. The combiner 13 combines the first and second signal fractions from the first branch 9 and second branch 10 into a combined signal. The combined signal is conveyed, from combiner 13 with two output ports into two branches that convey the two interference signals with a phase offset of 180 degrees to respectively a first detector 15 and a second detector 16. The signals received by detectors 15 and 16 may be analyzed using analyzer system 18, for enabling determination of the wavelength characteristics by the analyzer 18.

The radiation source 3 is configured for providing the optical radiation signal that is conveyed to the fiber grating sensor 2. The optical radiation signal comprises optical radiation at discrete wavelengths, preferably a plurality of discrete wavelengths. As described above, the signal may comprise a frequency comb signal. The plurality of discrete wavelengths include at least three wavelengths overlapping with a reflected signal spectral bandwidth of the fiber grating sensor 2. As a result, the phase noise level in the optical output signal will be significantly reduced. This in turn improves the signal-to-noise ratio at smaller interferometric visibilities: because the phase noise level is lower, smaller phase differences become visible under poor visibility conditions. Since the change in the interferometer phase is proportional to the center wavelength of the reflected signal spectrum scaled by the OPD, a smaller center wavelength change of the fiber grating sensor 2 can be detected.

Suppose that based on the periodic structure, the fiber grating sensor 2 reflects an optical signal with wavelength $\lambda_0$ under normal conditions, e.g. at a given temperature while the fiber grating sensor 2 is relaxed, i.e. neither stretched nor compressed, when it is illuminated by an optical signal that includes this wavelength. Stretching the fiber grating sensor 2 will increase the reflected wavelength, e.g. from $\lambda_0$ to $\lambda_1$. The change in the reflected wavelength $\Delta\lambda_{FBG}= |\lambda_1 - \lambda_0|$ of the fiber grating sensor 2 will result in a phase difference that is measurable from the interference signal in the branch detectors 15 and 16 of the interferometer 17. The phase difference $\Delta\Phi$ is determined by the optical path difference OPD between branches 9 and 10, and by the wavelength $\lambda$ (say $\lambda=\lambda_0$, assuming that $\lambda_0 >> \Delta\lambda_{FBG}$). In formula:

$$\Delta\phi = -\frac{2\pi\, OPD}{\lambda^2}\, \Delta\lambda_{FBG}$$

(eq. 1)

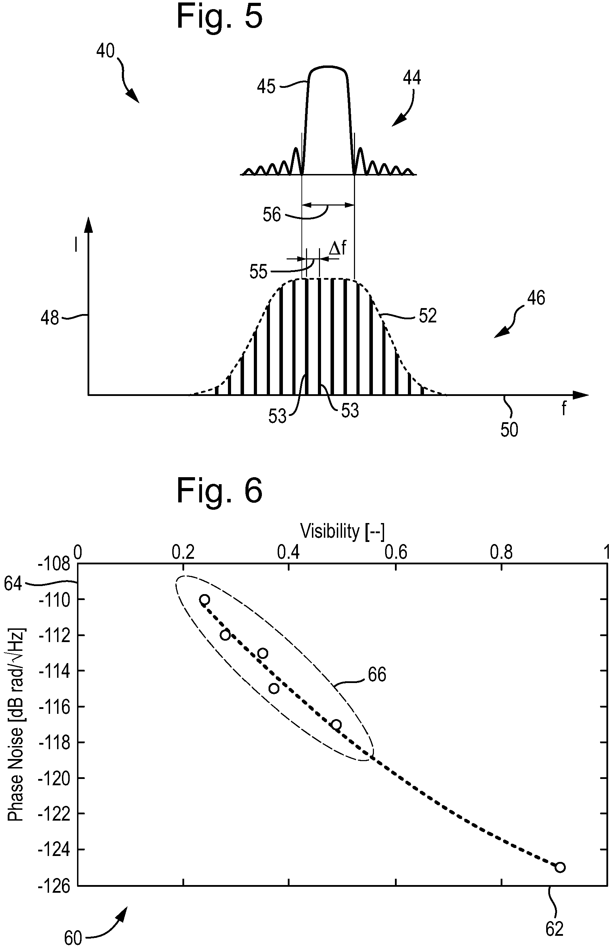

As follows from the above, making the OPD longer increases the phase difference $\Delta\Phi$ and thereby the detectability. In addition, also at a smaller wavelength $\lambda$, the phase difference $\Delta\Phi$ will be larger for the same $\Delta\lambda_{FBG}$. However, increasing the OPD will also decrease the interferometric visibility V, which in turn enlarges the minimum detectable phase difference $\Delta\Phi_{min}$ of the system 1. Contributing to this, is that the phase noise level becomes larger at lower interferometric visibilities V. This is visualized by the graph of figure 6, showing several phase noise measurements 66 at low visibility, and the predicted relation with visibility V on a logarithmic scale of the phase noise. Therefore, a further limit to the OPD is that in order to be able to measure the reflected optical signal from the fiber grating sensor 2 with sufficient visibility e.g.> 0.5, the OPD between branches 9 and 10 shall not be much larger than the coherence length (as a very rough indication this is a factor of e.g. 1.5 or 2). The coherence length is determined by the spectral bandwidth of the fiber grating sensor 2. Thus although there is a desire to increase the OPD to obtain a larger phase difference for the same $\Delta\lambda_{FBG}$, the OPD is restrained by physically determined limits.

In system 1 of figure 1, the radiation source 3 applied provides an optical input signal that comprises optical radiation at a plurality of discrete wavelengths. Due to the decreased level of phase noise, for the same OPD, the phase noise level corresponding $\Delta\lambda$ will also decrease. Therefore, smaller wavelength differences $\Delta\lambda$ will be measurable with system 1 of figure 1. In other words, the accuracy or resolution of the sensor increases.

In another example, illustrated in figure 2, the optical output signal of the fiber grating sensor 2 is filtered using a filter 20. Filter 20 is added in order to remove or suppress optical noise at undesired wavelength and optical signals from undesired sources, which may otherwise reach the detectors 15 and 16 and affect the measurement of the interference signal which result in a higher noise in the phase calculation. For example, fiber grating sensor 2 will not reflect an optical signal outside its spectral bandwidth, which is a spectral range that is centered around the reflected wavelength $\lambda_0$. If the fiber grating sensor is stretched or compressed, the reflected wavelength will shift (e.g. as above from $\lambda_0$ to $\lambda_1$), and therefore also the spectral bandwidth of the reflected signal will shift. However, any signal does not bear relevant information on the wavelength shift as it is outside the achievable range can still reach the detectors 15 and 16. Therefore, these signals may be filtered from the optical output signal. Filter 20 may also or alternatively comprise filter elements that are configured for filtering or shaping signals wherein noise is expected or often encountered. Various filtering techniques are possible without departing from the general concepts described herein, and may be implemented accordingly.

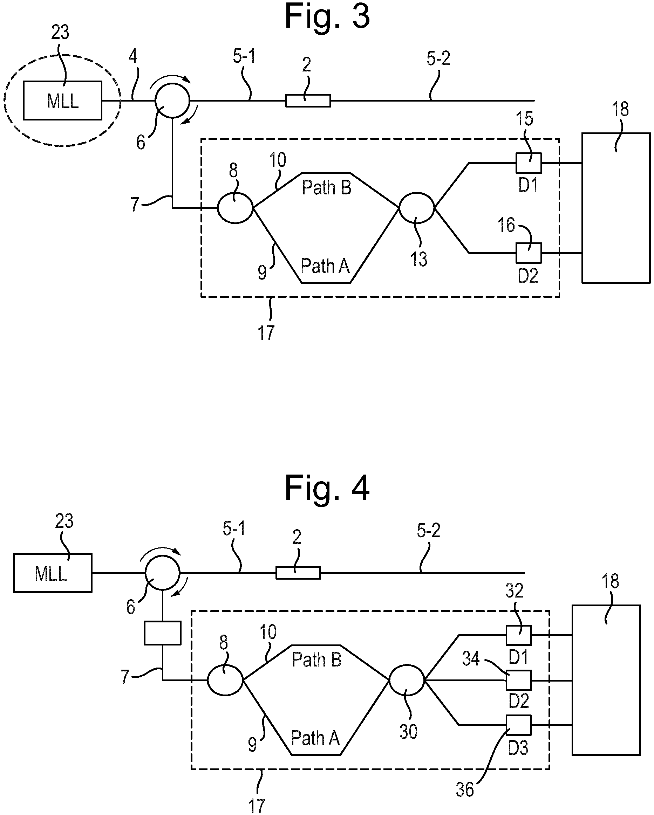

Figure 3 schematically illustrates another example, wherein a system 1 includes a mode-locked laser 23 as the radiation source for illuminating the fiber grating sensor 2. A mode-locked laser 23 enables to provide a frequency comb signal, including light at several discrete wavelengths that are equidistant in the optical frequency domain. This is schematically illustrated in figure 5, for example. Graph 40 is a schematic illustration of a frequency comb signal 46 provide by a mode-locked laser 23, wherein the vertical axis 48 provides the intensity of the optical signal and the horizontal axis 50 relates to the optical frequency thereof. The frequency comb signal 46 comprises a plurality of discrete wavelengths 53 that are equidistant in the frequency domain. The frequency difference is indicated as $\Delta f$ by reference numeral 55. Furthermore, the envelope 52 indicates the bandwidth of the mode-locked laser 23. Figure 5 illustrates how the optical signal of mode-locked laser 23 relates to the reflection signal spectral bandwidth 56 of the fiber grating sensor 2, showing the reflected signal 45 thereof in area 46 above the graph 40. As follows therefrom, within the reflection signal spectral bandwidth 56, the frequency comb signal 46 of mode-locked laser 23 provides several (here four) discrete wavelengths. The illustration is merely schematic, and typically or advantageously, a mode-locked laser 23 will provide a frequency comb signal that much more discrete wavelengths within and outside the bandwidth 56. However, already with the number of discrete wavelengths of frequency comb signal 46 illustrated in figure 5, significant improvement is obtained in exemplary implementations.

Back to figure 3, the mode-locked laser 23 provides the input signal in a similar manner to the fiber grating sensor 2 as compared to the example of figure 1. Due to the significant reduction of beat noise in the signal, the phase noise level of the interferometer measurement corresponding to Eq. (1) will be importantly reduced which thereby significantly improves the resolution of the system to measure the change in the wavelength of the fiber bragg grating .

Figure 4 illustrates a further example wherein use is made of a three-branch or 3x3 type interferometer. In some examples, more than three branches may be applied. The time dependent intensity of the interference signals between the detectors 32, 34 and 36 is well defined. For example, in the 3x3 Mach-Zehnder interferometer illustrated in figure 4, the signals received are as follows:

$$I_1(t) = A_0\left(1 + V\cos(\phi(t))\right) \qquad \text{(eq. 2)}$$

$$I_2(t) = A_0\left(1 + V\cos\left(\phi(t) + \frac{2\pi}{3}\right)\right) \qquad \text{(eq. 3)}$$

$$I_3(t) = A_0\left(1 + V\cos\left(\phi(t) - \frac{2\pi}{3}\right)\right) \qquad \text{(eq. 4)}$$

$$\phi(t) = -\arctan\left(\sqrt{3}\,\frac{I_1(t)-I_2(t)}{2I_3(t)-I_1(t)-I_2(t)}\right) \qquad \text{(eq. 5)}$$

From the above, the influence of changes in optical power $A_0$ and visibility V are common factors in the 3 interference signals and can be effectively suppressed, enabling accurate measurement of the shift $\Delta\phi$ in the phase $\phi(t)$ and via Eq. (1) the shift in wavelength $\Delta\lambda$.

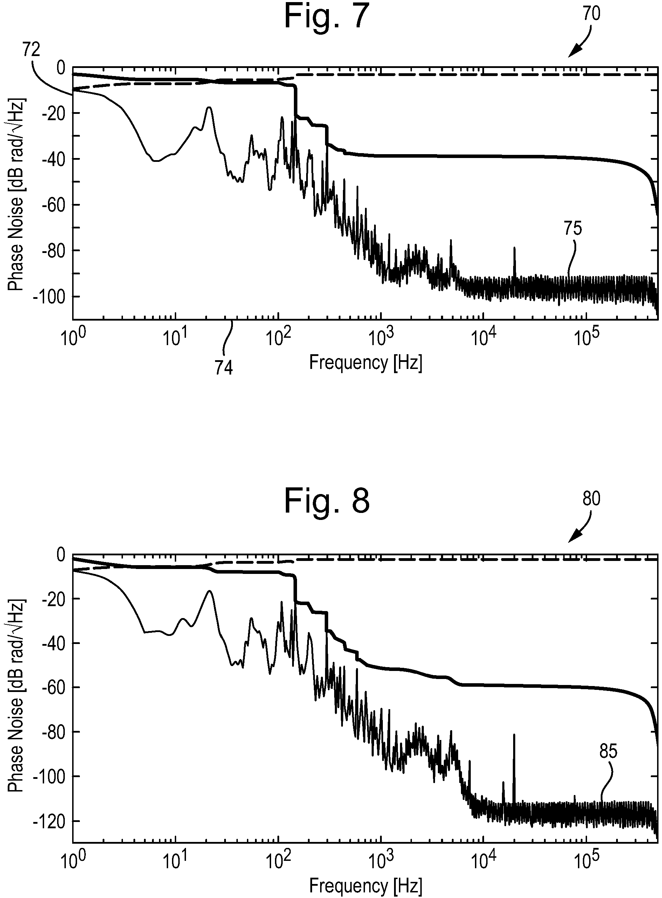

Figures 7 and 8 provide a comparison between two sensor systems, wherein in figure 7 the fiber grating sensor 2 is illuminated with a continuous wave laser beam and the reflected light is interrogated by an interferometer with an OPD selected to provide a visibility of about 0.5, and in figure 8 the same fiber grating sensor 2 is illuminated with an optical input signal comprising discrete wavelengths (in the example of figure 8, a mode-locked laser 23 providing a frequency comb signal similar to signal 46 in figure 5) and the reflected light is interrogated by the same interferometer. The phase noise level of the interference signal is illustrated on the vertical scale, which is a logarithmic scale. The horizontal scales (e.g. 74 in figure 7) Clearly, above 10 kHz, the phase noise level 85 in figure 8 is 20 dB less than the phase noise level 75 in figure 7. The phase signal with frequencies lower than ~10 kHz are phase generated by either variation in wavelength of the fiber grating and/or variation in the OPD of the interferometer. Both will results in a phase signal according to Eq. (1). In practical application, the OPD of the interferometer needs to be stabilized by careful packaging of the fiber interferometer.

The present invention has been described in terms of some specific examples thereof. It will be appreciated that the examples shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any example herein described and that modifications are possible which should be considered within the scope of the appended claims. For example, the invention is described in relation to the interrogation of fiber grating sensors, such as fiber Bragg gratings. However, alternative optical sensors may additionally or alternatively be interrogated, dependent on the desires of the skilled person and/or requirements of the field of application. Such alternative or additional optical sensors for example may be provided by an optical filtering device which reflects or transmits, from an incoming spectrum of the optical interrogation signal of the radiation source, one or more spectral bands. In the or these spectral bands, a center wavelength of the or each spectral band depends on a strain or a temperature applied to the optical filter device. An example of such a sensor is a Fabry-Perot filter in transmission. Also kinematic inversions are considered inherently disclosed and to be within the scope of the invention. Moreover, any of the components and elements of the various examples disclosed may be combined or may be incorporated in other examples where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Expressions such as "consisting of", when used in this description or the appended claims, should be construed not as an exhaustive enumeration but rather in an inclusive sense of "at least consisting of". Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

**Claims**

1. Optical sensor for interrogating a fiber grating sensor for determining a wavelength characteristic of an optical output signal obtained from the fiber grating sensor, the fiber grating sensor comprising a fiber section including an internal structural periodicity such as to reflect, upon receiving an optical interrogation signal in use, optical radiation at a reflection wavelength that is dependent on the internal structural periodicity,

   wherein the optical sensor comprises a radiation source for illuminating the fiber grating sensor with the optical interrogation signal, an interferometer, and an optical conveyance structure, wherein the optical conveyance structure is configured for conveying the optical interrogation signal to the fiber grating sensor and for conveying the optical output signal from the fiber grating sensor to the interferometer, and
   wherein the interferometer is configured for splitting the optical output signal into a first signal fraction and a second signal fraction, the interferometer including a first branch for conveying the first signal fraction and a second branch for conveying the second signal fraction, wherein the first branch and the second branch are of different length such as to establish a path length difference between the first signal fraction and the second signal fraction, and wherein the interferometer is further configured for combining the first and second signal fraction from the first and second branch into a combined signal, for providing the combined signal to at least one output port of the optical sensor for enabling determination of the wavelength characteristic by an analyzer operatively connectable to the at least one output port;
   wherein the radiation source is configured for providing an optical radiation signal comprising optical radiation at a plurality of discrete wavelengths, wherein the plurality of discrete wavelengths include at least three wavelengths overlapping with a spectral bandwidth of the fiber grating sensor.

2. Optical sensor according to claim 1, wherein the radiation source is configured for providing the optical radiation signal comprising the optical radiation such that a signal power at each wavelength of the plurality of discrete wavelengths is larger than a signal power at a wavelength different from the plurality of discrete wavelengths, such as to provide a frequency comb signal.

3. Optical sensor according to claim 2, wherein a signal power at each wavelength of the plurality of discrete wavelengths is at least 30% larger than a signal power at a wavelength different from the plurality of discrete wavelengths, preferably at least 50% larger, more preferably at least 70% larger, more preferably 90% larger.

4. Optical sensor according to any one or more of the preceding claims, wherein each two subsequent wavelengths of the plurality of discrete wavelengths provided by the radiation source have a wavelength difference, such that the wavelengths of the plurality of discrete wavelengths relate to equidistant frequencies in a frequency domain.

5. Optical sensor according to any one or more of the preceding claims, wherein the interferometer is operatively connected, using the optical conveyance structure, to an input side of the fiber grating sensor such as to obtain, as the optical output signal, a reflected signal from the fiber grating sensor comprising the reflection wavelength.

6. Optical sensor according to any one or more of the preceding claims, wherein the interferometer comprises at least one of: a Mach-Zehnder type interferometer, a Michelson type interferometer, a Fabry-Pérot interferometer, a Sagnac interferometer, a common path type interferometer.

7. Optical sensor according to any one or more of the preceding claims, wherein at least one of:

   the radiation source is a mode-locked laser; or
   the radiation source comprises at least two lasers of different frequency and a photonic-crystal fiber, wherein the a photonic-crystal fiber in use simultaneously receives beams from the at least two lasers such as to provide a frequency comb by four-wave mixing; or

the radiation source comprises a continuous-wave laser of which at least one of the amplitude or phase is in use modulated with an external modulator driven by a radio-frequency source.

8. Optical sensor according to any one or more of the preceding claims, wherein at least one of:

the interferometer is configured for providing the combined signal to at least two output ports, for enabling phase determination from at least two interference signals; or

the interferometer is configured for providing the combined signal to at least three output ports, for enabling phase determination from at least three interference signals.

9. Method of interrogating a fiber grating sensor using an optical sensor arrangement, for determining a wavelength characteristic of an optical output signal obtained from the fiber grating sensor, wherein the fiber grating sensor comprises a fiber section including an internal structural periodicity such as to reflect, upon receiving an optical interrogation signal in use, optical radiation at a reflection wavelength that is dependent on the internal structural periodicity, the method comprising:

illuminating, using a radiation source, the fiber grating sensor with said optical interrogation signal;

receiving, from the fiber grating sensor by an interferometer, an optical output signal;

splitting, by the interferometer, the optical output signal into a first signal fraction and a second signal fraction, the interferometer including a first branch for conveying the first signal fraction and a second branch for conveying the second signal fraction, wherein the first branch and the second branch are of different length such as to establish a path length difference between the first signal fraction and the second signal fraction; and

combining, by the interferometer, the first and second signal fraction from the first and second branch into a combined signal, and providing the combined signal to at least one output port for enabling determination of the wavelength characteristic by an analyzer operatively connected to the at least one output port;

wherein the step of illuminating is performed using a radiation source which is configured for providing an optical radiation signal comprising optical radiation at a plurality of discrete wavelengths, wherein the plurality of discrete wavelengths include at least three wavelengths overlapping with a spectral bandwidth of the fiber grating sensor.

10. Method according to claim 9, wherein the optical radiation signal for performing the illumination comprises the optical radiation such that a signal power at each wavelength of the plurality of discrete wavelengths is larger than a signal power at a wavelength different from the plurality of discrete wavelengths, such as to provide a frequency comb signal, such as

11. Method according to claim 10, wherein a signal power at each wavelength of the plurality of discrete wavelengths is at least 30% larger than a signal power at a wavelength different from the plurality of discrete wavelengths, preferably at least 50% larger, more preferably at least 70% larger, more preferably 90% larger.

12. Method according to any one or more of claims 9-11, wherein each two subsequent wavelengths of the plurality of discrete wavelengths provided by the radiation source have a wavelength difference, such that the wavelengths of the plurality of discrete wavelengths relate to equidistant frequencies in a frequency domain.

13. Method according to any one or more of claims 9-12, wherein at least one of:

for receiving the optical output signal from the fiber grating sensor, the interferometer is operatively connected to an input side of the fiber grating sensor such as to obtain, as the optical output signal, a reflected signal from the fiber grating sensor comprising the reflection wavelength.

14. Method according to any one or more of claims 9-13, wherein a mode-locked laser is comprised by the radiation source for performing the step of illumination.

15. Method according to any one or more of claims 9-14, wherein the step of providing the combined signal to at least one output port includes providing, by the interferometer, the combined signal to at least three output ports, for enabling phase determination from at least three interference signals.

16. Method according to any one or more of claims 9-15, wherein instead of a fiber grating sensor, the sensor is an optical filtering device which reflects or transmits, from an incoming spectrum of the optical interrogation signal of the radiation source, one or more spectral bands, wherein a center wavelength of the or each spectral band depends on a strain or a temperature applied to the optical filter device.

# Fig. 1

# Fig. 2

# Fig. 3

# Fig. 4

# Fig. 5

# Fig. 6

## Fig. 7

## Fig. 8

**EUROPEAN SEARCH REPORT**

Application Number

EP 23 20 2741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 452 020 A (UNIV YUNNAN) 9 December 2022 (2022-12-09) * paragraph [0036] – paragraph [0064]; figures 1-2 * | 1-16 | INV. G01D5/353 |
| A | US 2014/152995 A1 (DONG BO [US] ET AL) 5 June 2014 (2014-06-05) * the whole document * | 1-16 | |
| A | WO 2012/033718 A1 (UNIV LELAND STANFORD JUNIOR [US]) 15 March 2012 (2012-03-15) * the whole document * | 1-16 | |

TECHNICAL FIELDS SEARCHED (IPC)

G01D

The present search report has been drawn up for all claims

| Place of search | Date of completion of the search | Examiner |
|---|---|---|
| Munich | 5 March 2024 | Lyons, Christopher |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

  ...........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 2741

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2024

| Patent document cited in search report | | Publication date | Patent family member(s) | | Publication date |
|---|---|---|---|---|---|
| CN 115452020 | A | 09-12-2022 | NONE | | |
| US 2014152995 | A1 | 05-06-2014 | US | 2014152995 A1 | 05-06-2014 |
| | | | US | 2017248480 A1 | 31-08-2017 |
| WO 2012033718 | A1 | 15-03-2012 | EP | 2614344 A1 | 17-07-2013 |
| | | | JP | 5894993 B2 | 30-03-2016 |
| | | | JP | 2013543112 A | 28-11-2013 |
| | | | WO | 2012033718 A1 | 15-03-2012 |

EPO FORM P0459

For more details about this annex : see Official Journal of the European Patent Office, No. 12/82